(19) Europäisches Patentamt
European Patent Office
Office européen des brevets

(11) **EP 4 696 806 A1**

(12) **EUROPEAN PATENT APPLICATION**
published in accordance with Art. 153(4) EPC

(43) Date of publication:
**18.02.2026 Bulletin 2026/08**

(21) Application number: **24788803.5**

(22) Date of filing: **11.04.2024**

(51) International Patent Classification (IPC):
*C23C 2/06* (2006.01)    *C22C 18/00* (2006.01)
*C22C 18/04* (2006.01)    *C23C 2/02* (2006.01)
*C23C 2/26* (2006.01)

(52) Cooperative Patent Classification (CPC):
**C22C 18/00; C22C 18/04; C23C 2/06;** C23C 2/02;
C23C 2/26

(86) International application number:
**PCT/JP2024/014682**

(87) International publication number:
**WO 2024/214781 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.04.2023 JP 2023064064**

(71) Applicant: NIPPON STEEL CORPORATION
Chiyoda-ku
Tokyo 100-8071 (JP)

(72) Inventors:
• **URANAKA Masaaki**
**Tokyo 100-8071 (JP)**
• **MITSUNOBU Takuya**
**Tokyo 100-8071 (JP)**
• **TAKEBAYASHI Hiroshi**
**Tokyo 100-8071 (JP)**

(74) Representative: **Vossius & Partner**
**Patentanwälte Rechtsanwälte mbB**
**Siebertstrasse 3**
**81675 München (DE)**

(54) **PLATED STEEL MATERIAL**

(57)    The plated steel material includes a steel material and a plated layer disposed on a surface of the steel material, and
the plated layer has a predetermined chemical composition, and the plated layer has a diffraction intensity obtained from a result of X-ray diffraction measurement, the diffraction intensity satisfying a predetermined relationship formula.

## FIG. 1

**Description**

TECHNICAL FIELD

The present invention relates to a plated steel material.

Priority is claimed on Japanese Patent Application No. 2023-064064, filed April 11, 2023, the content of which is incorporated herein by reference.

BACKGROUND ART

A steel material on the surface of which a Zn-plated layer containing Al and Mg is formed (a Zn-Al-Mg-based plated steel material) has exceptional corrosion resistance. Therefore, Zn-Al-Mg-based plated steel materials are widely used, for example, as a material for structural members required to have corrosion resistance, such as building materials.

For example, Patent Document 1 describes a plated steel sheet including: a steel sheet; and a plated layer formed on a surface of the steel sheet, in which the plated layer contains Al: 0 to 90 mass% and Mg: 0 to 10 mass% in terms of average composition, and the remainder containing Zn and an impurity; and a pattern part disposed so as to have a certain shape and a non-pattern part are formed on the plated layer, the pattern part and the non-pattern part each include one or two of a first region and a second region, the absolute value of the difference between the area fraction of the first region in the pattern part and the area fraction of the first region in the non-pattern part is 30% or more, and the first region has an orientation ratio of 3.5 or more and the second region has an orientation ratio of less than 3.5.

Patent Document 2 describes a Zn-Al-Mg-based plated steel sheet including: a steel sheet; and a plated layer containing Al in an amount of 4 mass% or more and 22 mass% or less, Mg in an amount of 1 mass% or more and 5 mass% or less, and the remainder containing Zn and an unavoidable impurity, in which the cross section of the plated layer that is parallel to the surface of the plated layer has a diffraction intensity ratio $I(200)/I(111)$ of 0.8 or more, which is a ratio of X-ray diffraction intensity $I(200)$ from the (200) plane of the Al phase to X-ray diffraction intensity $I(111)$ from the (111) plane of the Al phase.

Incidentally, plated steel materials are placed in various environments, and in areas where volcanic gas is generated, industrial areas, and the like, SOx gas in the atmosphere dissolves into rainwater and becomes acid rain, which may affect the corrosion resistance of the plated steel materials. However, in the related art, improvement in corrosion resistance in an acidic environment has hardly been studied.

Patent Document 1 discloses that, when the first region means a region having an intensity ratio of 3.5 or more between (0002) plane diffraction peak intensity $I_{0002}$ and (10-11) plane diffraction peak intensity $I_{10-11}$ in the Zn phase and the second region means a region the intensity ratio of which is less than 3.5, the difference between the area ratio of the first region in the pattern part and the area ratio of the first region in the non-pattern part is set to be 30% or more to intentionally express characters, designs, and the like on the surface of the plated layer. However, Patent Document 1 has not studied corrosion resistance in an acidic environment.

Patent Document 2 discloses that, by controlling the orientation of the Al phase in the plated layer, the plated layer has an appearance like a pear skin, which has fine texture and a lot of smooth glossy parts. However, corrosion resistance in an acidic environment has not been examined.

Citation List

Patent Document

Patent Document 1: Japanese Unexamined Patent Application, First Publication No. 2021-85086
Patent Document 2: PCT International Publication No. WO 2011/001662

SUMMARY OF INVENTION

Technical Problem

The present invention has been made in view of the above circumstances, and an object thereof is to provide a plated steel material having exceptional sacrificial corrosion resistance and corrosion resistance in an acidic environment.

EP 4 696 806 A1

Solution to Problem

In order to achieve the above object, the present invention adopts the constitutions described below.

[1] A plated steel material including:

a steel material; and
a plated layer on the steel material,
in which the plated layer has a chemical composition containing, in terms of mass%,
Al: 6.0 to 30.0%,
Mg: 3.0 to 15.0%,
Fe: 0.01 to 15.00%,
Si: 0 to 2.0%,
Ca: 0 to 2.00%,
one or two or more elements selected from an element group of Sb: 0 to 0.50%, Pb: 0 to 0.50%, Cu: 0 to 1.00%, Sn: 0 to 1.00%, Ti: 0 to 1.00%, Cr: 0 to 1.00%, Nb: 0 to 1.00%, Zr: 0 to 1.00%, Ni: 0 to 1.000%, Mn: 0 to 1.00%, Mo: 0 to 1.00%, Ag: 0 to 1.00%, Li: 0 to 1.00%, La: 0 to 1.000%, Ce: 0 to 1.000%, B: 0 to 0.500%, Y: 0 to 0.50%, P: 0 to 0.50%, Sr: 0 to 0.50%, Co: 0 to 0.500%, Bi: 0 to 0.500%, In: 0 to 0.50%, V: 0 to 0.500%, and W: 0 to 0.50%, in an amount of 0 to 5.0% in total, and
the remainder: Zn and an impurity, and
the plated layer has a diffraction intensity obtained from a result of X-ray diffraction measurement, the diffraction intensity satisfying formula (1) below:

$$0.5 \leq I(002)_{Zn}/\{I(100)_{Zn} + I(101)_{Zn}\} \leq 25.0 \cdot\cdot\cdot \ (1)$$

in the formula (1), $I(002)_{Zn}$ represents an $\eta$-Zn phase (002) diffraction intensity, $I(100)_{Zn}$ represents an $\eta$-Zn phase (100) diffraction intensity, and $I(101)_{Zn}$ represents an $\eta$-Zn phase (101) diffraction intensity.

[2] The plated steel material according to [1], in which Al and Mg in the plated layer are Al: 10.0 to 25.0% and Mg: 4.5 to 15.0%, respectively.
[3] The plated steel material according to [1] or [2], in which Al and Mg in the plated layer are Al: 15.0 to 22.0% and Mg: 5.5 to 15.0%, respectively.
[4] The plated steel material according to any one of [1] to [3], in which a diffraction intensity of the plated layer obtained from a result of X-ray diffraction measurement satisfies formula (2) below:

$$1.5 \leq I(002)_{Zn}/\{I(100)_{Zn} + I(101)_{Zn}\} \leq 25.0 \cdot\cdot\cdot \ (2).$$

[5] The plated steel material according to any one of [1] to [4], in which an area fraction of [$\alpha$/MgZn$_2$ eutectic structure] contained in a surface structure of the plated layer in a plane view is 5 to 70%.
[6] The plated steel material according to any one of [1] to [5], in which an area fraction of [eutectic structure of $\alpha$/MgZn$_2$] contained in a surface structure of the plated layer in a plane view is 10 to 70%.
[7] The plated steel material according to any one of [1] to [6], in which

Sn in the plated layer is Sn: 0.05 to 0.50%, in terms of mass%, and
a Mg$_2$Sn phase is detected by a result of X-ray diffraction measurement of the plated layer.

[8] The plated steel material according to any one of [1] to [7], in which 0.005 to 0.500% in total of one or two of La and Ce are contained.

Advantageous Effects of Invention

According to the present invention, it is possible to provide a plated steel material having exceptional corrosion resistance in an acidic environment.

BRIEF DESCRIPTION OF DRAWING

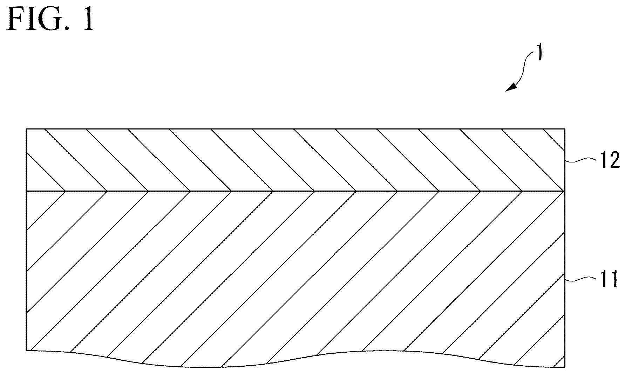

[FIG. 1] A schematic cross-sectional view of a plated steel material according to an embodiment of the present

3

invention.

## DESCRIPTION OF EMBODIMENTS

Regarding the corrosion resistance in an acidic environment of a plated steel material, it is necessary to form a plated layer having exceptional corrosion resistance to an acidic environment such as acid rain on the surface of a steel material. In order to improve the corrosion resistance in an acidic environment of the plated layer, an element constituting the plated layer is required not to be easily eluted even in an acidic environment.

Therefore, the present inventors have conducted intensive studies in order to improve the corrosion resistance in an acidic environment of a Zn-plated layer containing Al and Mg. An $\eta$-Zn phase contained in the plated layer has a hexagonal crystal structure, and various crystal orientation planes are included therein. The corrosion resistance of these crystal orientation planes is not uniform in all of the orientation planes. For example, since the (002) plane of the $\eta$-Zn phase is a dense crystal orientation plane in which the atomic density of Zn is relatively high, it is considered that Zn itself does not easily dissolve relatively, and the corrosion resistance of Zn itself is relatively high. On the other hand, since the (100) plane of the $\eta$-Zn phase is a crystal orientation plane in which the atomic density of Zn is lower than that of the (002) plane, Zn itself easily dissolves relatively, and the corrosion resistance of Zn itself is low, but corrosion of base metal is protected by a corrosion product generated along with corrosion of Zn, and it is thus considered that sacrificial corrosion resistance with respect to the base metal is high. Therefore, it was considered that the corrosion resistance in an acidic environment of the Zn plated layer containing Al and Mg can be improved by orientating the (002) plane of the $\eta$-Zn phase parallel to the surface of the plated layer.

Therefore, the present inventors attempted to orientate the (002) plane of the $\eta$-Zn phase contained in the plated layer parallel to the surface of the plated layer. When the Zn plated layer containing Al and Mg is solidified from a molten state, an $\alpha$ phase crystallizes first, then, a $MgZn_2$ phase or an $\eta$-Zn phase crystallizes, and furthermore, a ternary eutectic structure including the $\alpha$ phase, the $MgZn_2$ phase, and the $\eta$-Zn phase is generated. The ternary eutectic temperature that serves as an indicator of the start of the generation of the ternary eutectic structure can be roughly predicted based on the chemical composition of the plated layer, but it was found that when a eutectic reaction is caused at a temperature lower than the ternary eutectic temperature which is predicted, the (002) plane of the $\eta$-Zn phase in the ternary eutectic structure is oriented to be parallel to the surface of the plated layer. Specifically, it was found that a eutectic reaction can be caused at a temperature lower than the ternary eutectic temperature which is predicted and the (002) plane of the $\eta$-Zn phase can be oriented to be parallel to the surface of the plated layer by adjusting an infiltration temperature at the time of infiltrating the steel material into a plating bath and cooling conditions after the steel material is pulled up from the plating bath.

Hereinafter, the plated steel material according to an embodiment of the present invention will be described. A plated steel material of the present embodiment includes a steel material and a plated layer disposed on a surface of the steel material, the plated layer has a chemical composition containing, in terms of mass%, Al: 6.0 to 30.0%, Mg: 3.0 to 15.0%, Fe: 0.01 to 15.00%, Si: 0 to 2.0%, and Ca: 0 to 2.00%, and containing one or two or more elements selected from the element group of Sb: 0 to 0.50%, Pb: 0 to 0.50%, Cu: 0 to 1.00%, Sn: 0 to 1.00%, Ti: 0 to 1.00%, Cr: 0 to 1.00%, Nb: 0 to 1.00%, Zr: 0 to 1.00%, Ni: 0 to 1.000%, Mn: 0 to 1.00%, Mo: 0 to 1.00%, Ag: 0 to 1.00%, Li: 0 to 1.00%, La: 0 to 1.000%, Ce: 0 to 1.000%, B: 0 to 0.500%, Y: 0 to 0.50%, P: 0 to 0.50%, Sr: 0 to 0.50%, Co: 0 to 0.500%, Bi: 0 to 0.500%, In: 0 to 0.50%, V: 0 to 0.500%, and W: 0 to 0.50%, in an amount of 0 to 5.0% in total, and the remainder: Zn and an impurity, and the plated layer has a diffraction intensity obtained from a result of X-ray diffraction measurement, the diffraction intensity satisfying the following formula (1). The surface of the steel material mentioned herein refers to the interface between the plated layer and the steel material.

$$0.5 \leq I(002)_{Zn}/\{I(100)_{Zn} + I(101)_{Zn}\} \leq 25.0 \quad \cdots \quad (1)$$

In the formula (1), $I(002)_{Zn}$ represents an $\eta$-Zn phase (002) diffraction intensity, $I(100)_{Zn}$ represents an $\eta$-Zn phase (100) diffraction intensity, and $I(101)_{Zn}$ represents an $\eta$-Zn phase (101) diffraction intensity.

In the following description, the expression "%" of the content of each element in a chemical composition means "mass%". The content of an element in the chemical composition may be referred to as an element concentration (for example, Zn concentration, Mg concentration, and the like). The "corrosion resistance in an acidic environment" refers to a property of the plated layer (specifically, Zn-Al-Mg alloy layer) being less likely to corrode in an acidic environment. The "flat portion corrosion resistance" refers to a property of the plated layer (specifically, Zn-Al-Mg alloy layer) itself being less likely to corrode. The "sacrificial corrosion resistance" refers to a property of suppressing steel material corrosion at a portion where steel material is exposed (for example, an end surface portion where the plated steel material is cut, a portion where the plated layer is cracked due to processing, and a portion where steel material is exposed due to peeling of the plated layer). In addition, the "plated layer" means a plating film produced by the so-called hot-dip plating treatment.

As illustrated in FIG. 1, a plated steel material 1 according to the present embodiment includes a steel material 11. The shape of steel material 11 is not particularly limited, and an example of steel material 11 is a steel sheet. In addition, steel material 11 may be, for example, a formed base steel material, such as a steel pipe, a civil engineering and construction material (fence culvert, corrugated pipe, drain channel lid, splash preventing plate, bolt, wire mesh, guard rail, water stop wall, and the like), a home electric appliance member (a housing of an outdoor unit of an air conditioner, or the like), and a vehicle component (a suspension member, or the like). The forming is, for example, various deformation processing methods, such as pressing, roll forming, and bending.

The material of steel material 11 is not particularly limited. The steel material 11 may be, for example, various steel materials, such as general steel, Al-killed steel, ultra low carbon steel, high carbon steel, various high tensile strength steels, and some high alloy steels (a steel containing a reinforcing element such as Ni, Cr, etc.). The steel material 11 may be a hot-rolled steel sheet, a hot-rolled steel strip, a cold-rolled steel sheet, a cold-rolled steel strip, and the like described in JIS G 3302: 2010. The manufacturing method of the steel sheet (hot rolling method, pickling method, cold rolling method, or the like), specific manufacturing conditions thereof, and the like are also not particularly limited.

The steel material 11 that serves as a plating original sheet may be a pre-plated steel material pre-plated on the surface of the steel material 11. An example of the pre-plated steel material is an Ni pre-plated steel material having a Ni plating on the steel material 11. The pre-plated steel material is obtained by, for example, electrolytic treatment or displacement plating. The electrolytic treatment is performed by immersing a base steel material in a sulfuric acid bath or a chloride bath containing metal ions of various pre-plating compositions to perform an electrolytic treatment. The displacement plating is performed by immersing a base steel material in an aqueous solution containing metal ions of various pre-plating compositions and having a pH adjusted with sulfuric acid to substitute and deposit the metal.

The plated steel material 1 according to the present embodiment includes a plated layer 12 on the steel material 11. In the plated steel material 1 according to the present embodiment, the plated layer 12 is mainly made of a Zn-Al-Mg alloy layer due to the chemical composition described later. In addition, the plated layer 12 of the plated steel material 1 according to the present embodiment may include an Fe-Al-based interfacial alloy layer between the steel material 11 and the Zn-Al-Mg alloy layer. That is, the plated layer 12 may have a single-layer structure of the Zn-Al-Mg alloy layer or a laminate structure including the Zn-Al-Mg alloy layer and the Fe-Al-based interfacial alloy layer. In addition, the Fe-Al-based interfacial alloy layer may contain Ni.

The plated layer according to the present embodiment is made of, as the chemical composition, Zn and other alloying elements. The chemical composition of the plated layer will be described in detail below. Note that the elements the concentration of which has a lower limit of 0% are not essential for solving the problem of the plated steel material according to the present embodiment but are optional elements which are allowed to be included in the plating layer for the purpose of, for example, improving characteristics.

<Al: 6.0 to 30.0%>

Al forms an α-phase that is a solid solution with Zn, and contributes to improvement in flat portion corrosion resistance, corrosion resistance in an acidic environment, and sacrificial corrosion resistance. Therefore, the Al concentration is set to 6.0% or more. The Al concentration may be set to 10.0% or more, 12.0% or more, or 15.0% or more. On the other hand, when there is excess Al, the Mg concentration and the Zn concentration relatively decrease, and sacrificial corrosion resistance deteriorates. Therefore, the Al concentration is set to 30.0% or less. The Al concentration may be set to 28.0% or less, 25.0% or less, 22.0% or less, or 20.0% or less.

<Mg: 3.0 to 15.0%>

Mg is an element essential for securing flat portion corrosion resistance, corrosion resistance in an acidic environment, and sacrificial corrosion resistance. Therefore, the Mg concentration is set to 3.0% or more. The Mg concentration may be set to 4.5% or more, 5.5% or more, or 6.0% or more. On the other hand, when the Mg concentration is excessive, workability, particularly powdering properties, may deteriorate, and flat portion corrosion resistance may further deteriorate. Therefore, the Mg concentration is set to 15.0% or less. The Mg concentration may be set to 12.0% or less, 10.0% or less, or 8.0% or less.

<Fe: 0.01% to 15.00%>

Fe may be contained in the plated layer in an amount of 0.01% or more. It has been confirmed that, when the Fe concentration is 15.00% or less, the performance of the plated layer is not adversely affected. The Fe concentration may be set to, for example, 0.05% or more, 0.10% or more, 0.50% or more, or 1.00% or more. The Fe concentration may be set to, for example, 10.00% or less, 5.00% or less, 2.00% or less, or 1.00% or less. Since Fe may be mixed from the steel material, the Fe concentration may be 0.05% or more.

<Si: 0% to 2.0%>

The Si concentration may be 0%. On the other hand, Si contributes to improvement in flat portion corrosion resistance and corrosion resistance in an acidic environment. Therefore, the Si concentration may be set to 0.05% or more, 0.1% or more, 0.2% or more, or 0.5% or more. On the other hand, when the Si concentration is excessive, flat portion corrosion resistance, corrosion resistance in an acidic environment, and sacrificial corrosion resistance deteriorate. Therefore, the Si concentration is set to 2.0% or less. The Si concentration may be set to 1.5% or less, 1.0% or less, or 0.5% or less.

<Ca: 0% to 2.00%>

The Ca concentration may be 0%. On the other hand, Ca is an element capable of adjusting the optimum Mg elution amount for imparting flat portion corrosion resistance and corrosion resistance in an acidic environment. Therefore, the Ca concentration may be 0.05% or more, 0.10% or more, or 0.50% or more. On the other hand, when the Ca concentration is excessive, flat portion corrosion resistance and workability deteriorate. Therefore, the Ca concentration is set to 2.00% or less. The Ca concentration may be set to 1.00% or less, 0.50% or less, or 0.10% or less.

Furthermore, the plated layer according to the present embodiment may contain one or two or more elements selected from the element group of Sb: 0 to 0.50%, Pb: 0 to 0.50%, Cu: 0 to 1.00%, Sn: 0 to 1.00%, Ti: 0 to 1.00%, Cr: 0 to 1.00%, Nb: 0 to 1.00%, Zr: 0 to 1.00%, Ni: 0 to 1.000%, Mn: 0 to 1.00%, Mo: 0 to 1.00%, Ag: 0 to 1.00%, Li: 0 to 1.00%, La: 0 to 1.000%, Ce: 0 to 1.000%, B: 0 to 0.500%, Y: 0 to 0.50%, P: 0 to 0.50%, Sr: 0 to 0.50%, Co: 0 to 0.500%, Bi: 0 to 0.500%, In: 0 to 0.50%, V: 0 to 0.500%, and W: 0 to 0.50%. The total of these elements is 0 to 5.0%. When the total exceeds 5.0%, flat portion corrosion resistance, red rust resistance, and base metal corrosion resistance may deteriorate. In addition, these elements are optional additive elements, and the total amount may be thus 0%.

<Sb, Pb: 0 to 0.50% each>

The concentration of Sb and Pb may be 0%. On the other hand, Sb and Pb contribute to improvement in sacrificial corrosion resistance. Therefore, the concentration of each of Sb and Pb may be set to 0.05% or more, 0.10% or more, or 0.15% or more. On the other hand, when the concentration of Sb and Pb is excessive, flat portion corrosion resistance deteriorates. Therefore, the concentration of each of Sb and Pb is set to 0.50% or less. The concentration of each of Sb and Pb may be set to 0.40% or less, 0.30% or less, or 0.25% or less.

<Cu, Ti, Cr, Nb, Zr, Mn, Mo, Ag, and Li: 0 to 1.00% each>

The concentration of each of Cu, Ti, Cr, Nb, Zr, Mn, Mo, Ag, and Li may be 0%. On the other hand, they contribute to improvement in sacrificial corrosion resistance. Therefore, the concentration of each of Cu, Ti, Cr, Nb, Zr, Mn, Mo, Ag, and Li may be set to 0.05% or more, 0.08% or more, or 0.10% or more. On the other hand, when the concentration of Cu, Ti, Cr, Nb, Zr, Mn, Mo, Ag, and Li is excessive, flat portion corrosion resistance deteriorates. Therefore, the concentration of each of Cu, Ti, Cr, Nb, Zr, Mn, Mo, Ag, and Li is set to 1.00% or less. The concentration of each of Cu, Ti, Cr, Nb, Zr, Mn, Mo, Ag, and Li may be set to 0.80% or less, 0.70% or less, or 0.60% or less.

<Ni: 0 to 1.000%>

The Ni concentration may be 0%. On the other hand, they contribute to improvement in sacrificial corrosion resistance. Therefore, the Ni concentration may be set to 0.050% or more, 0.080% or more, or 0.100% or more. On the other hand, when the Ni concentration is excessive, flat portion corrosion resistance deteriorates. Therefore, the Ni concentration is set to 1.000% or less. The Ni concentration may be set to 0.800% or less, 0.700% or less, or 0.600% or less.

<Sn: 0 to 1.00%>

The Sn concentration may be 0%. On the other hand, Sn is an element that forms an intermetallic compound with Mg and improves the sacrificial corrosion resistance of the plated layer. Therefore, the Sn concentration may be set to 0.01% or more, 0.05% or more, or 0.10% or more. However, when the Sn concentration is excessive, flat portion corrosion resistance deteriorates. Therefore, the Sn concentration is set to 1.00% or less. The Sn concentration may be set to 0.50% or less, 0.30% or less, or 0.20% or less.

<La and Ce: 0 to 1.000% each>

The concentration of each of La and Ce may be 0%. On the other hand, La and Ce contribute to improvement in sacrificial corrosion resistance. Therefore, the concentration of each of La and Ce may be set to 0.100% or more, 0.150% or more, or 0.200% or more. On the other hand, when the concentration of each of La and Ce is excessive, flat portion corrosion resistance deteriorates. Therefore, the concentration of each of La and Ce is set to 1.000% or less. The concentration of each of La and Ce may be set to 0.500% or less. In addition, the total of one or two of La and Ce may be set to 0.010 to 0.500%.

<B: 0 to 0.500%>

The B concentration may be 0%. On the other hand, B contributes to improvement in sacrificial corrosion resistance. Therefore, the B concentration may be set to 0.100% or more, 0.150% or more, or 0.200% or more. On the other hand, when the B concentration is excessive, flat portion corrosion resistance deteriorates. Therefore, the B concentration is set to 0.500% or less. The B concentration may be set to 0.400% or less or 0.300% or less.

<Y, P, and Sr: 0 to 0.50% each>

The concentration of each of Y, P, and Sr may be 0%. On the other hand, Y, P, and Sr contribute to improvement in sacrificial corrosion resistance. Therefore, the concentration of each of Y, P, and Sr may be set to 0.10% or more, 0.15% or more, or 0.20% or more. On the other hand, when the concentration of each of Y, P, and Sr is excessive, flat portion corrosion resistance deteriorates. Therefore, the concentration of each of Y, P, and Sr is set to 0.50% or less. The concentration of each of Y, P, and Sr may be set to 0.40% or less or 0.30% or less.

<Co, Bi, and V: 0 to 0.500% each>

The concentration of each of Co, Bi, and V may be 0%. On the other hand, Co, Bi, and V contribute to improvement in sacrificial corrosion resistance. Therefore, the concentration of each of Co, Bi, and V may be set to 0.100% or more, 0.150% or more, or 0.200% or more, respectively. On the other hand, when the concentration of each of Co, Bi, and V is excessive, flat portion corrosion resistance deteriorates. Therefore, the concentration of each of Co, Bi, and V is set to 0.500% or less. The concentration of each of Co, Bi, and V may be set to 0.400% or less or 0.300% or less.

<In and W: 0 to 0.50% each>

The concentration of each of In and W may be 0%. On the other hand, In and W contribute to improvement in sacrificial corrosion resistance. Therefore, the concentration of each of In and W may be set to 0.10% or more, 0.15% or more, or 0.20% or more, respectively. On the other hand, when the concentration of each of In and W is excessive, flat portion corrosion resistance deteriorates. Therefore, the concentration of each of In and W is set to 0.50% or less. The concentrations of In and W may be set to 0.40% or less and 0.30% or less, respectively.

<Remainder: Zn and impurity>

The remainder in the components of the plated layer according to the present embodiment includes Zn and an impurity. Zn is an element that brings flat portion corrosion resistance, corrosion resistance in an acidic environment, and sacrificial corrosion resistance to the plated layer. In the present embodiment, the impurity means an impurity mixed from a manufacturing environment or the like and an impurity allowed to an extent that the characteristics of the plated steel material according to the present embodiment are not adversely affected. For example, in the plated layer, a small amount of components other than Fe may be mixed as the impurity due to mutual atomic diffusion between the base steel material and the plating bath.

The chemical components of the plated layer are measured by the following method. For example, the plated steel material is cut into a size of 30 mm × 30 mm to obtain a measurement sample. Next, an acid solution is obtained by peeling off and dissolving the plated layer in the measurement sample using a 10% hydrochloric acid aqueous solution to which 0.06 mass% of an inhibitor (manufactured by ASAHI Chemical Co., Ltd., IBIT 710K) for suppressing corrosion of the steel material has been added. Next, the obtained acid solution is subjected to ICP analysis. Thereby, the chemical composition of the plated layer can be determined. Upon cutting the plated steel material, it is preferable to avoid the end portion and the weld of the plated steel material. The type of the acid is not particularly limited as long as the acid can dissolve the plated layer. For example, the acid is 10 vol% HCl. The chemical composition is measured three times by the above-described means, and the average thereof is taken as the chemical composition of the plated layer.

Next, the metallographic structure of the plated layer will be described.

The plated layer contains an $\alpha$ phase and a $MgZn_2$ phase. The $\alpha$ phase is a phase containing a fine Al phase and a fine Zn phase. Part of the $\alpha$ phase and the $MgZn_2$ phase may form a lamellar binary eutectic structure ([eutectic structure of $\alpha$ phase/$MgZn_2$]). When [eutectic structure of $\alpha$ phase/$MgZn_2$] is contained, the flat portion corrosion resistance of the plated layer further improves. However, when the plated layer contains a large amount of [eutectic structure of $\alpha$ phase/$MgZn_2$] due to excessive precipitation of the $\alpha$ phase and the $MgZn_2$ phase, the proportion of the $\eta$-Zn phase becomes relatively small, and red rust resistance and base metal corrosion resistance deteriorate. Therefore, [eutectic structure of $\alpha$ phase/$MgZn_2$] is preferably in a range of 70% or less or preferably in a range of 5 to 70% and may be in a range of 10 to 70% in terms of area fraction. [Eutectic structure of $\alpha$ phase/$MgZn_2$] may be 0% or more than 0%.

In addition, the plated layer of the present embodiment contains an $\eta$-Zn phase in addition to the $\alpha$ phase and the $MgZn_2$ phase. At least part of the $\eta$-Zn phase forms a ternary eutectic structure together with the $\alpha$ phase and the $MgZn_2$ phase. In addition, the $\eta$-Zn phase may be contained in the plated layer as a massive $\eta$-Zn phase.

In addition, when 0.05 to 0.5% of Sn is contained in the plated layer, the $Mg_2Sn$ phase is reliably contained in the plated layer. The $Mg_2Zn$ phase may be contained even when the amount of Sn is 0.05% or less. Since the amount of the $Mg_2Sn$ phase is small, the presence thereof is confirmed by X-ray diffraction measurement. When the plated layer contains the $Mg_2Sn$ phase therein, the plated steel material has more improved sacrificial corrosion resistance.

When a peak is detected at 23.4 $\pm$ 0.3° in the X-ray diffraction measurement with K$\alpha$ rays from a Cu tube, it is determined that the Mg2Sn phase is present. X-ray diffraction measurement is performed using an X-ray diffractometer (manufactured by Rigaku Corporation (model number RINT-TTR III) under the conditions of X-ray output: 50 kV and 300 mA; copper target; goniometer TTR (horizontal goniometer); slit width of K$\beta$ filter: 0.05 mm; longitudinal limiting slit width: 2 mm; light receiving slit width: 8 mm; and light receiving slit 2: open, and under the measurement conditions of scan speed: 5 deg./min; step width: 0.01 deg; and scan axis: 2$\theta$ (5 to 90°).

The plated layer may contain a phase other than the above-described phases as the remainder. For example, an Al-Ca-Si phase or the like may be contained.

Next, the crystal orientation of the $\eta$-Zn phase will be described.

In the plated layer of the present embodiment, X-ray diffraction intensity obtained from the result of X-ray diffraction measurement of the plated layer needs to satisfy the relationship of the following formula (1). When the following formula (1) is satisfied, the (002) plane of the $\eta$-Zn phase is oriented to become parallel to the surface of the plated layer, and corrosion resistance in an acidic environment improves. The X-ray diffraction intensity more preferably satisfies the following formula (2). When $I(002)_{Zn}/\{I(100)_{Zn} + I(101)_{Zn}\}$ is less than 0.5, the orientation of the (002) plane of the $\eta$-Zn phase is not sufficient, and corrosion resistance in an acidic environment becomes insufficient. In addition, when $I(002)_{Zn}/\{I(100)_{Zn} + I(101)_{Zn}\}$ exceeds 25.0, there is a concern that sacrificial corrosion resistance may deteriorate.

$$0.5 \leq I(002)_{Zn}/\{I(100)_{Zn} + I(101)_{Zn}\} \leq 25.0 \quad \cdots \quad (1)$$

$$1.5 \leq I(002)_{Zn}/\{I(100)_{Zn} + I(101)_{Zn}\} \leq 25.0 \quad \cdots \quad (2)$$

In the formula (1) and the formula (2), $I(002)_{Zn}$ represents an $\eta$-Zn phase (002) diffraction intensity, $I(100)_{Zn}$ represents an $\eta$-Zn phase (100) diffraction intensity, and $I(101)_{Zn}$ represents an $\eta$-Zn phase (101) diffraction intensity.

A method for measuring the area fraction of [eutectic structure of $\alpha$ phase/$MgZn_2$] is as follows. First, the surface of the plated layer is adjusted to be flat by mechanical polishing. Next, the surface of the plated layer is chemically polished by colloidal polishing, and the polishing is continued until the surface becomes a mirror surface state.

The surface of the plated layer after polishing is observed by SEM. Specifically, an element distribution image is captured using SEM-EDS at a magnification of 5000 times (a region that is 200 $\mu$m in length and 200 $\mu$m in width). In this element distribution image, a phase in which Mg and Zn coexist is specified as the $MgZn_2$ phase. In addition, a phase containing Al and Zn is specified as the $\alpha$ phase. Most of the $\alpha$ phase shows a dendritic form. In addition, after [eutectic structure of $\alpha$ phase/$MgZn_2$] containing the $\alpha$ phase and the $MgZn_2$ phase is specified, the area fraction of [eutectic structure of $\alpha$ phase/$MgZn_2$] contained in the visual field is calculated by binarization using image analysis software.

A method for measuring $I(002)_{Zn}/\{I(100)_{Zn} + I(101)_{Zn}\}$ in the formula (1) and the formula (2) is as follows. First, the surface of the plated layer is mechanically polished and chemically polished as necessary to bring the surface of the plated layer into a mirror surface state. Next, for example, X-ray diffraction measurement is performed using an X-ray diffractometer (manufactured by Rigaku Corporation (model number RINT-TTR III) under the conditions of X-ray output: 50 kV and 300 mA; copper target; goniometer TTR (horizontal goniometer); slit width of K$\beta$ filter: 0.05 mm; longitudinal limiting slit width: 2 mm; light receiving slit width: 8 mm; and light receiving slit 2: open, and under the measurement conditions of scan speed: 5 deg./min; step width: 0.01 deg; and scan axis: 20 (5 to 90°). Then, for the $\eta$-Zn phase, the diffraction intensity (maximum intensity in the range of 38.993 $\pm$ 0.2°) from the (100) plane, the diffraction intensity (maximum intensity in the range of 36.297 ± 0.2°) from the (002) plane, and the diffraction intensity (maximum intensity in the range of 43.232 ± 0.2°) from the (101) plane are each measured. The diffraction intensity is an intensity excluding the background intensity. From the obtained diffraction intensity, $I(002)_{Zn}/\{I(100)_{Zn} + I(101)_{Zn}\}$ is determined.

Whether or not the $Mg_2Sn$ phase is contained in the plated layer is determined by whether or not a diffraction peak specific to $Mg_2Sn$ appears when the X-ray diffraction measurement is performed.

The adhesion amount of the plated layer per one surface may be, for example, within a range of 20 to 300 g/m². When the adhesion amount per one surface is set to 20 g/m² or more, flat portion corrosion resistance, corrosion resistance in an acidic environmental, and sacrificial corrosion resistance of the plated steel material can be further enhanced. On the other hand, when the adhesion amount per one surface is set to 300 g/m² or less, the workability of the plated steel material can be further improved.

Next, the method for producing a plated steel material according to the present embodiment will be described, but the method for producing a plated steel material according to the present embodiment is not particularly limited. For example, according to the manufacturing conditions described below, the plated steel material according to the present embodiment can be obtained.

In the manufacturing method of the plated steel material of the present embodiment, the steel material is annealed in a reducing atmosphere, the temperature of the annealed steel material is made to be (the plating bath temperature - 20)°C or lower, the steel material is then immersed in a hot-dip plating bath, and the steel material is pulled up from the hot-dip plating bath to form a plated layer on the surface of the steel material. Next, the plated layer is cooled at an average cooling rate of 15 °C/sec or higher while a cooling gas is sprayed at a flux of 5000 (L/min/m²) or lower until the temperature of the plated layer reaches 320°C from the bath temperature, and then cooled at an average cooling rate of 5 °C/sec or lower in a range of 320 to 260°C while a cooling gas is sprayed at a flux of 25000 (L/min/m²) or higher.

The steel material that serves as a plating original sheet is annealed in a reducing atmosphere. The reducing atmosphere and the annealing conditions are not particularly limited. By this annealing, the oxide present on the surface of the steel material is removed as much as possible.

Next, the steel material immediately after the annealing is cooled with a cooling gas such as nitrogen until the temperature of the steel material reaches (the plating bath temperature - 20)°C or lower and then immersed in the hot-dip plating bath. The temperature of the steel material is made to be a temperature lower than the plating bath temperature by 20°C or more, whereby the surface roughness (surface roughness on the Zn-Al-Mg alloy layer side) of a Fe-Al-based interface alloy layer that is generated in the interface between the steel material and the plated layer is made to be small.

The chemical composition of the plating bath may be appropriately adjusted to obtain the chemical composition of the plated layer described above. The temperature of the plating bath is also not particularly limited. It is possible to appropriately select a temperature at which hot-dip plating can be performed. For example, the plating bath temperature may be set to higher than the melting point of the plating bath by about 20°C or more.

Next, the steel material is pulled up from the hot-dip plating bath. The adhesion amount of the plated layer can be controlled by controlling the pulling speed of the steel material. If necessary, wiping may be performed on the steel material to which the plated layer is adhered to control the adhesion amount of the plated layer. The adhesion amount of the plated layer is not particularly limited, and can be set, for example, within the above-described range.

Next, the plated layer is cooled. Regarding the cooling, the plated layer is first cooled at an average cooling rate of 15 °C/sec or higher until the temperature of the plated layer reaches 320°C from the bath temperature. The average cooling rate until the temperature of the plated layer reaches 320°C from the bath temperature may be 30 °C/sec or lower. The cooling is performed by, for example, spraying a cooling gas, but the vibration of the steel material is extremely reduced by setting the flux of the cooling gas at that time to 5000 (L/min/m²) or lower. The flux of the cooling gas may be set to 100 (L/min/m²) or higher. When the cooling gas is sprayed for cooling, a plurality of blowing nozzles for the cooling gas may be arranged along the conveying path of the steel material, and the cooling gas may be sprayed from the nozzles.

In a range of the bath temperature to 320°C, an $\alpha$ phase and a $MgZn_2$ phase are crystallized, furthermore, a eutectic reaction between the $\alpha$ phase and the $MgZn_2$ phase proceeds, and the generation of a binary eutectic structure of the $\alpha$ phase and the $MgZn_2$ phase ([eutectic structure of $\alpha$ phase/$MgZn_2$]) is promoted. At this time, the plated layer is cooled at 15 °C/sec or higher in the range of the bath temperature to 320°C while the vibration of the steel material is suppressed by suppressing the flux of the cooling gas, which makes crystallization of the ternary eutectic structure starting from the surface of the plated layer less likely to proceed.

Subsequently, the plated layer is cooled in a range of 320 to 260°C at an average cooling rate of 5 °C/sec or lower while a cooling gas is sprayed at a flux of 25000 (L/min/m²) or higher. In this case as well, a plurality of blowing nozzles for the cooling gas are arranged along the conveying path of the steel material. In addition, when the flux is set to 25000 (L/min/m²) or higher, the plated layer is vibrated by the spraying of the cooling gas. The flux of the cooling gas in the range of 320 to 260°C may be 80000 (L/min/m²) or lower. As a result, the crystallization of the ternary eutectic structure which has been suppressed so far is started; however, at this time, the (002) plane of the $\eta$-Zn phase contained in the ternary eutectic structure is oriented to be parallel to the surface of the plated layer.

In the cooling in the range of the bath temperature to 320°C and in the range of 320°C to 260°C, the cooling gas to be sprayed is not particularly limited, and may be a non-oxidizing gas such as nitrogen, an inert gas such as argon, or air, or a mixed gas thereof.

When the flux of the cooling gas is controlled, the shape of the gas nozzle from which the cooling gas is blown out is set, for example, in a range of a diameter of 1 to 50 mm. The angle formed by the tip of the gas nozzle and the steel sheet is set, for example, in a range of 70 to 110°, more preferably 90° (perpendicular). The distance between the tip of the gas nozzle and the steel sheet is set in a range of 30 to 1000 mm. The shape, angle, and distance of the gas nozzle are merely examples, and are not limited to the above ranges.

There is no need to particularly limit the cooling condition of lower than 260°C, and the cooling may be any of air cooling or natural cooling.

When the plated layer is cooled to satisfy the above conditions, a plated layer satisfying the formula (1) is formed. The reason is presumed as follows.

In the above manufacturing method, the temperature of the steel material at the time of the infiltration into the plating bath is made lower than the plating bath temperature by 20°C or more, whereby the surface roughness of the Fe-Al-based interface alloy layer is made to be small, and the nucleation sites of the ternary eutectic structure are reduced. The temperature difference between the temperature of the steel material at the time of the infiltration into the plating bath and the plating bath temperature is 40°C or less. When the temperature difference between the temperature of the steel material at the time of the infiltration into the plating bath and the plating bath temperature exceeds 40°C, the plating appearance becomes poor. In addition, when the steel material immersed in the plating bath is pulled up, the plated layer is rapidly cooled in the range of the bath temperature to 320°C while the vibration of the steel material is suppressed, whereby an $\alpha$ phase and a $MgZn_2$ phase are crystallized in the plated layer, but crystallization of the ternary eutectic structure is suppressed to set the start temperature of the eutectic reaction to a temperature lower than the eutectic start temperature that is predicted from the plating composition. Next, the crystallization of the ternary eutectic structure is started by cooling the plated layer in the range of 320°C to 260°C under the above conditions, but the crystallization is crystallization from a temperature lower than the eutectic start temperature that is predicted from the plating composition, and it is thus considered that the (002) plane of the $\eta$-Zn phase contained in the ternary eutectic structure is oriented to be parallel to the surface of the plated layer, and the above formula (1) is satisfied.

Examples

Hereinafter, examples of the present invention will be described. However, the conditions in examples are merely one condition example adopted to confirm the operability and effects of the present invention. The present invention is not limited to this one condition example. The present invention can adopt various conditions as long as the object of the present invention is achieved without departing from the gist of the present invention.

As a plating original sheet, a hot-rolled steel sheet having a sheet thickness of 1.6 mm was used. This plating original sheet was annealed. The annealing conditions were a soaking temperature of 800°C and a soaking time of 2 minutes in a $N_2$-4%$H_2$ atmosphere. Next, the annealed plating original sheet was air-cooled with $N_2$ gas to adjust the temperature at the time of being immersed in the plating bath to be (plating bath temperature - 20)°C or lower, then, immersed in various hot-dip plating baths, and then lifted at a lifting rate of 20 to 200 mm/sec. At the time of pulling out the plating original sheet, the plating adhesion amount was controlled with a $N_2$ wiping gas. After the steel material was pulled out from the plating bath, the steel material was cooled under the conditions shown in Table 2.

In the cooling in the range of the bath temperature to 320°C and in the range of 320 to 260°C, a $N_2$ gas was used as the cooling gas, and the gas flux was controlled as shown in the table. The shape of the gas nozzle from which the cooling gas was blown out had a diameter of 6 mm, the angle formed by the tip of the gas nozzle and the steel sheet was the perpendicular, and the distance between the tip of the gas nozzle and the steel sheet was 35 mm.

In this way, plated steel materials Nos. 1 to 50 were manufactured.

The chemical composition of the plated layer was as shown in Table 1. Also, the metallographic structure of the plated layer was evaluated, and the results are shown in Table 3. Furthermore, the corrosion resistance in an acidic environment and sacrificial corrosion resistance of the plated steel material were evaluated, and the results are shown in Table 3.

The chemical composition of the plated layer was measured by immersing a sample cut into a 30 mm $\times$ 30 mm size in a 10% HCl aqueous solution to which an inhibitor was added to pickle and peel off the plated layer, and ICP analysis was then performed on elements eluted in the aqueous solution.

The area fraction of [eutectic structure of $\alpha$ phase/$MgZn_2$] was evaluated as follows. First, the surface of the plated layer was polished by mechanical polishing and colloidal polishing until a mirror surface state was formed. Next, the surface of the plated layer was observed at a magnification of 5000 times with a field emission scanning electron microscope (FE-SEM) equipped with an energy dispersive elemental analyzer (EDS) (a region that was 200 $\mu$m in length and 200 $\mu$m in width), and an element distribution image was captured using EDS. In the element distribution image, a phase in which Mg and Zn coexisted was specified as an $MgZn_2$ phase, a phase containing Al and Zn was specified as an $\alpha$

phase, and [eutectic structure of $\alpha$ phase/MgZn$_2$] in which these phases formed a lamellar shape was specified. In addition, the area fraction of [eutectic structure of $\alpha$ phase/MgZn$_2$] contained in the visual field was calculated by binarization using image analysis software.

A method for measuring I(002)$_{Zn}$/{I(100)$_{Zn}$ + I(101)$_{Zn}$} in the formula (1) was as follows. First, the surface of the plated layer was brought into a mirror surface state in the same manner as described above. Next, X-ray diffraction measurement was performed using an X-ray diffractometer (manufactured by Rigaku Corporation, model number RINT-TTR III) under the conditions of X-ray output: 50 kV and 300 mA; copper target; goniometer TTR (horizontal goniometer); slit width of K$\beta$ filter: 0.05 mm; longitudinal limiting slit width: 2 mm; light receiving slit width: 8 mm; and light receiving slit 2: open, and under the measurement conditions of scan speed: 5 deg./min; step width: 0.01 deg; and scan axis: 2$\theta$ (5 to 90°).

Then, then, for the $\eta$-Zn phase, the diffraction intensity (maximum intensity in the range of 38.993 ± 0.2°) from the (100) plane, the diffraction intensity (maximum intensity in the range of 36.297 ± 0.2°) from the (002) plane, and the diffraction intensity (maximum intensity in the range of 43.232 ± 0.2°) from the (101) plane were each measured. The diffraction intensity was an intensity excluding the background intensity. From the obtained diffraction intensity, I(002)$_{Zn}$/{I(100)$_{Zn}$ + I(101)$_{Zn}$} was determined.

Whether or not the Mg$_2$Sn phase was contained in the plated layer was determined by whether or not a diffraction peak specific to Mg$_2$Sn appeared when the X-ray diffraction measurement was performed.

The corrosion resistance in an acidic environment was evaluated as follows. A test piece was produced by cutting a plated steel material into a size of 150 mm × 50 mm. An end surface portion of the test piece was protected with polyester tape manufactured by Nitto Denko Technical Corporation so that the end surface was not exposed, and the area of a flat portion that was to be a corrosion evaluation surface was then measured.

In addition, the test piece having the end surface protected with the tape was subjected to an artificial acid rain cycle test defined in JIS H 8502:1999. In the artificial acid rain cycle test, one cycle included acid test solution spraying (spraying time: 2 h, temperature: 35°C, pH: 3.5), drying (drying time: 4 h, temperature: 60°C, humidity: 20 to 30% RH), and wetting (wetting time: 2 h, temperature: 50°C, humidity: 95% RH), and this cycle was repeatedly performed. The acid test solution used was produced by adding HNO$_3$·H$_2$SO$_4$ to 5% NaCl, and adding NaOH thereto to adjust the pH to 3.5.

After the artificial acid rain cycle test was performed, the tape that protected the end surface of the test piece was peeled off, and the test piece was immersed in a 30% chromic acid (VI) solution at 25°C for 10 minutes to remove a corrosion product generated on the sample surface. The weight of the test piece after immersion in the chromic acid (VI) solution was measured, the difference from the weight before the start of the test was calculated and was then divided by the area of the evaluation surface to convert the difference into a corrosion loss, and corrosion resistance was evaluated. The evaluation criteria were as follows. "AAAA", "AAA", "AA", and "A" were regarded as acceptable. "AAAA", ""AAA", "AA", and "A" were regarded as acceptable.

AAAA: Corrosion loss of 20 g/m$^2$ or less after 60 cycles
AAA: Corrosion loss of more than 20 g/m$^2$ and 40 g/m$^2$ or less after 60 cycles
AA: Corrosion loss of more than 40 g/m$^2$ and 60 g/m$^2$ or less at 60 cycles
A: Corrosion loss of more than 60 g/m$^2$ and 100 g/m$^2$ or less at 60 cycles
B: Corrosion loss of more than 100 g/m$^2$ at 60 cycles

The sacrificial corrosion resistance (simulated end surface corrosion resistance) was evaluated as follows. The plated steel material was cut into 100 mm × 100 mm to produce a test piece. In a region centering the intersection point of the diagonal lines of the test piece and having a diameter of 25 mm, the plated layer was removed by milling to expose the steel sheet (base metal). The region with a diameter of 25 mm where the base metal was exposed was subjected to the neutral salt spray test specified in JIS Z 2371: 2015, and the sacrificial corrosion resistance was evaluated based on the red rust generation state in the region where the base metal was exposed. The evaluation criteria of the sacrificial corrosion resistance are shown below. "AAA", "AA", and "A" were regarded as acceptable.

AAA: Red rust area ratio of 5% or less in 2200 h
AA: Red rust area ratio of more than 5% and 10% or less in 1800 h
A: Red rust area ratio of more than 10% and 15% or less in 1000 h
B: Red rust area ratio of more than 15% in 1000 h

In Nos. 1 to 32, 42 to 45, 47, 48, and 50 (Examples) according to the present invention, the chemical composition and metallographic structure of the plated layer were appropriately controlled, and both corrosion resistance in an acidic environment and sacrificial corrosion resistance were exceptional.

In Comparative Example No. 33, the Al amount was insufficient in the plated layer. Therefore, in No. 33, corrosion resistance in an acidic environment was insufficient.

In Comparative Example No. 34, the Al amount was excessive in the plated layer. Therefore, in No. 34, dendrites of the α phase were excessively generated, and the dendrites functioned as nucleation sites of the η-Zn phase, which made it impossible to secure the orientation of the η-Zn phase and made both corrosion resistance in an acidic environment and sacrificial corrosion resistance insufficient.

In Comparative Example No. 35, the Mg amount was insufficient in the plated layer. Therefore, in No. 35, the orientation of the η-Zn phase could not be secured, and both corrosion resistance in an acidic environment and sacrificial corrosion resistance were insufficient.

In Comparative Example No. 36, the Mg amount was excessive in the plated layer. Therefore, in No. 36, the $MgZn_2$ phase became excessive, the orientation of the η-Zn phase could not be secured, and the corrosion resistance in an acidic environment was insufficient.

In Comparative Example No. 37, the flux of the cooling gas was excessive in the cooling in the range of the bath temperature to 320°C. Therefore, in No. 37, the orientation of the η-Zn phase could not be secured, and corrosion resistance in an acidic environment was insufficient.

In Comparative Example No. 38, the flux of the cooling gas was insufficient during cooling in a range of 320°C to 260°C. Therefore, in No. 38, the orientation of the η-Zn phase could not be secured, and corrosion resistance in an acidic environment was insufficient.

In Comparative Example No. 39, the cooling rate became low in the cooling in the range of the bath temperature to 320°C. Therefore, in No. 39, the orientation of the η-Zn phase could not be secured, and corrosion resistance in an acidic environment was insufficient.

In Comparative Example No. 40, the cooling rate became excessive in the cooling in the range of 320°C to 260°C. Therefore, in No. 40, the orientation of the η-Zn phase could not be secured, and corrosion resistance in an acidic environment was insufficient.

In Comparative Example No. 41, the temperature of the steel sheet during the immersion in the plating bath was higher than (the bath temperature - 20)°C. Therefore, in No. 41, the orientation of the η-Zn phase could not be secured, and corrosion resistance in an acidic environment was insufficient.

In Comparative Example No. 46, the cooling rate became excessive in the cooling in the range of 320°C to 260°C. Therefore, in No. 46, the orientation of the η-Zn phase could not be secured, and corrosion resistance in an acidic environment was insufficient.

In Comparative Example No. 49, the difference between the intrusion temperature of the sheet and the bath temperature was more than 40°C. Therefore, the external appearance of plating was poor.

[Table 1]

| Type | No. | Components of plated layer (mass%) Remainder: Zn and impurity | | | | | | | | | |
| | | Zn | Al | Mg | Sn | Si | Ca | Ni | Fe | Other elements | |
| | | | | | | | | | | Kind | Total (%) |
| Example | 1 | Remainder | 6.0 | 3.0 | 0 | 0 | 0 | 0 | 0.05 | - | - |
| Example | 2 | Remainder | 11.0 | 3.0 | 0.06 | 0.1 | 0 | 0 | 0.05 | Bi | 0.005 |
| Example | 3 | Remainder | 11.0 | 3.0 | 0.06 | 0.1 | 0 | 0 | 0.05 | La: 0.021, Ce: 0.050 | 0.071 |
| Example | 4 | Remainder | 10.0 | 4.5 | 0.01 | 0.1 | 0.04 | 0 | 0.05 | V | 0.009 |
| Example | 5 | Remainder | 10.0 | 5.0 | 0.01 | 0.2 | 0 | 0 | 0.08 | - | - |
| Example | 6 | Remainder | 12.0 | 5.0 | 0.01 | 0.1 | 0 | 0 | 0.08 | Pb | 0.03 |
| Example | 7 | Remainder | 12.0 | 6.0 | 0.01 | 0.2 | 0 | 0 | 0.11 | Zr | 0.01 |
| Example | 8 | Remainder | 12.0 | 6.0 | 0.01 | 0.2 | 0 | 0 | 0.08 | Co | 0.008 |
| Example | 9 | Remainder | 13.0 | 5.0 | 0 | 0.2 | 0 | 0 | 0.12 | - | - |
| Example | 10 | Remainder | 13.0 | 5.0 | 0 | 0.2 | 0 | 0 | 0.11 | La: 0.022, Ce: 0.050 | 0.072 |

(continued)

| Type | No. | Components of plated layer (mass%) Remainder: Zn and impurity | | | | | | | | | |
|---|---|---|---|---|---|---|---|---|---|---|---|
| | | Zn | Al | Mg | Sn | Si | Ca | Ni | Fe | Other elements | |
| | | | | | | | | | | Kind | Total (%) |
| Example | 11 | Remainder | 15.0 | 5.0 | 0.01 | 0.2 | 0 | 0.001 | 0.22 | Ag | 0.01 |
| Example | 12 | Remainder | 17.0 | 5.0 | 0.01 | 0.2 | 0.04 | 0 | 0.22 | Li | 0.02 |
| Example | 13 | Remainder | 18.0 | 6.0 | 0 | 0.4 | 0.04 | 0 | 0.24 | Sb | 0.08 |
| Example | 14 | Remainder | 19.0 | 6.0 | 0.20 | 0.3 | 0.04 | 0.001 | 0.12 | P | 0.01 |
| Example | 15 | Remainder | 19.0 | 6.0 | 0.01 | 0.2 | 0.04 | 0 | 0.14 | In | 0.02 |
| Example | 16 | Remainder | 19.0 | 7.0 | 0.01 | 0.2 | 0.04 | 0.001 | 0.22 | La: 0.020, Ce: 0.055 | 0.075 |
| Example | 17 | Remainder | 19.0 | 7.0 | 0.01 | 0.2 | 0.04 | 0.001 | 0.24 | Mn | 0.01 |
| Example | 18 | Remainder | 20.0 | 10.0 | 0.01 | 0.3 | 0.05 | 0 | 0.32 | B | 0.005 |
| Example | 19 | Remainder | 20.0 | 6.0 | 0.01 | 0.1 | 0.04 | 0 | 0.41 | Mo | 0.03 |
| Example | 20 | Remainder | 21.0 | 3.5 | 0 | 0.1 | 0.04 | 0 | 0.44 | Sr | 0.02 |
| Example | 21 | Remainder | 22.0 | 6.0 | 0.01 | 0.4 | 0.04 | 0 | 0.32 | La | 0.010 |
| Example | 22 | Remainder | 22.0 | 8.0 | 0.01 | 0.7 | 0.04 | 0 | 0.43 | Ce | 0.010 |
| Example | 23 | Remainder | 22.0 | 4.0 | 0 | 0.1 | 0.01 | 0 | 0.33 | Nb | 0.02 |
| Example | 24 | Remainder | 24.0 | 3.0 | 0 | 0.1 | 0 | 0.001 | 0.25 | - | - |
| Example | 25 | Remainder | 22.0 | 4.0 | 0 | 0.1 | 0.01 | 0.012 | 0.43 | - | - |
| Example | 26 | Remainder | 23.0 | 8.0 | 0.01 | 0.7 | 0.04 | 0 | 0.51 | Ti | 0.01 |
| Example | 27 | Remainder | 23.0 | 15.0 | 0.01 | 0.5 | 0.04 | 0 | 0.60 | Y | 0.01 |
| Example | 28 | Remainder | 25.0 | 8.0 | 0.01 | 1.1 | 0.04 | 0.001 | 0.60 | Cu | 0.10 |
| Example | 29 | Remainder | 24.0 | 7.0 | 0.01 | 1.5 | 0.04 | 0 | 0.72 | W | 0.01 |
| Example | 30 | Remainder | 25.0 | 8.0 | 0.02 | 2.0 | 0.04 | 0 | 1.30 | - | - |
| Example | 31 | Remainder | 28.0 | 8.0 | 0.02 | 0.5 | 0.04 | 0 | 1.52 | Cr | 0.03 |
| Example | 32 | Remainder | 30.0 | 9.0 | 0.01 | 0.8 | 0.04 | 0 | 1.74 | - | - |
| Comparative Example | 33 | Remainder | <u>4.5</u> | 4.0 | 0 | 0 | 0 | 0 | 0.12 | - | - |
| Comparative Example | 34 | Remainder | <u>32.0</u> | 7.0 | 0 | 0.1 | 0 | 0 | 0.13 | - | - |
| Comparative Example | 35 | Remainder | 19.0 | <u>2.6</u> | 0 | 0.2 | 0.01 | 0 | 0.15 | - | - |
| Comparative Example | 36 | Remainder | 19.0 | <u>15.5</u> | 0 | 0 | 0.05 | 0 | 0.11 | - | - |
| Comparative Example | 37 | Remainder | 15.0 | 3.0 | 0 | 0 | 0.01 | 0 | 0.82 | - | - |
| Comparative Example | 38 | Remainder | 15.0 | 3.0 | 0 | 0 | 0.01 | 0 | 0.82 | - | - |
| Comparative Example | 39 | Remainder | 15.0 | 3.0 | 0 | 0 | 0.01 | 0 | 0.84 | - | - |

(continued)

| Type | No. | Components of plated layer (mass%) Remainder: Zn and impurity | | | | | | | | Other elements | |
|---|---|---|---|---|---|---|---|---|---|---|---|
| | | Zn | Al | Mg | Sn | Si | Ca | Ni | Fe | Kind | Total (%) |
| Comparative Example | 40 | Remainder | 15.0 | 3.0 | 0 | 0 | 0.01 | 0 | 0.82 | - | - |
| Comparative Example | 41 | Remainder | 24.0 | 3.0 | 0 | 0.4 | 0 | 0 | 0.51 | - | - |
| Example | 42 | Remainder | 20.0 | 7.0 | 0.01 | 0.1 | 0.11 | 0 | 0.42 | - | - |
| Example | 43 | Remainder | 22.0 | 6.0 | 0.01 | 0.4 | 0.04 | 0 | 0.34 | - | - |
| Example | 44 | Remainder | 21.0 | 7.5 | 0.01 | 0.4 | 0.12 | 0 | 0.43 | - | - |
| Example | 45 | Remainder | 21.0 | 8.0 | 0.01 | 0.5 | 1.01 | 0 | 0.44 | - | - |
| Comparative Example | 46 | Remainder | 15.0 | 3.0 | 0 | 0 | 0.01 | 0 | 0.91 | - | - |
| Example | 47 | Remainder | 19.0 | 6.7 | 1.00 | 0.2 | 0.07 | 0.001 | 0.22 | - | - |
| Example | 48 | Remainder | 30.0 | 7.0 | 0.01 | 0 | 0.04 | 0 | 14.72 | - | - |
| Comparative Example | 49 | Remainder | 18.0 | 5.5 | 0.01 | 0.2 | 0.04 | 0 | 0.21 | - | - |
| Example | 50 | Remainder | 19.0 | 7.0 | 0.01 | 0.2 | 0.04 | 0.001 | 0.22 | - | - |
| Underlined values are outside the scope of the present invention. | | | | | | | | | | | |

[Table 2]

| Type | No. | Manufacturing conditions | | | | | | |
|---|---|---|---|---|---|---|---|---|
| | | Bath temperature (°C) | Adhesion amount of plated layer (g/m$^2$) | Entering sheet temperature (°C) | Cooling rate in bath temperature to 320°C (°C/s) | Cooling gas flux in bath temperature to 320°C (L/min/m$^2$) | Average cooling rate in 320 to 260°C (°C/s) | Cooling gas flux in 320 to 260°C (L/min/m$^2$) |
| Example | 1 | 460 | 45 | 420 | 15 | 5000 | 5 | 25000 |
| Example | 2 | 480 | 50 | 450 | 15 | 5000 | 5 | 25000 |
| Example | 3 | 480 | 50 | 460 | 15 | 5000 | 5 | 25000 |
| Example | 4 | 500 | 50 | 470 | 15 | 5000 | 5 | 25000 |
| Example | 5 | 500 | 50 | 480 | 15 | 5000 | 5 | 25000 |
| Example | 6 | 530 | 50 | 510 | 15 | 5000 | 5 | 25000 |
| Example | 7 | 530 | 50 | 510 | 15 | 1000 | 5 | 25000 |
| Example | 8 | 530 | 45 | 510 | 15 | 1000 | 5 | 25000 |
| Example | 9 | 530 | 45 | 495 | 15 | 1000 | 5 | 25000 |
| Example | 10 | 530 | 45 | 510 | 15 | 1000 | 5 | 25000 |
| Example | 11 | 530 | 45 | 510 | 15 | 5000 | 5 | 25000 |
| Example | 12 | 530 | 15 | 505 | 15 | 5000 | 5 | 25000 |
| Example | 13 | 530 | 45 | 505 | 15 | 5000 | 5 | 25000 |
| Example | 14 | 530 | 45 | 510 | 15 | 5000 | 5 | 25000 |

(continued)

| Type | No. | Manufacturing conditions | | | | | | |
|---|---|---|---|---|---|---|---|---|
| | | Bath temperature (°C) | Adhesion amount of plated layer (g/m²) | Entering sheet temperature (°C) | Cooling rate in bath temperature to 320°C (°C/s) | Cooling gas flux in bath temperature to 320°C (L/min/m²) | Average cooling rate in 320 to 260°C (°C/s) | Cooling gas flux in 320 to 260°C (L/min/m²) |
| Example | 15 | 530 | 45 | 510 | 15 | 1000 | 5 | 25000 |
| Example | 16 | 530 | 45 | 510 | 15 | 1000 | 5 | 25000 |
| Example | 17 | 530 | 45 | 505 | 15 | 1000 | 5 | 25000 |
| Example | 18 | 590 | 45 | 570 | 15 | 1000 | 5 | 25000 |
| Example | 19 | 540 | 45 | 520 | 15 | 1000 | 5 | 25000 |
| Example | 20 | 540 | 45 | 500 | 20 | 1000 | 5 | 25000 |
| Example | 21 | 540 | 55 | 520 | 20 | 1000 | 5 | 25000 |
| Example | 22 | 540 | 56 | 520 | 20 | 1000 | 5 | 25000 |
| Example | 23 | 540 | 60 | 510 | 20 | 5000 | 5 | 25000 |
| Example | 24 | 560 | 54 | 540 | 20 | 5000 | 5 | 25000 |
| Example | 25 | 540 | 44 | 515 | 20 | 5000 | 5 | 25000 |
| Example | 26 | 550 | 80 | 530 | 20 | 1000 | 5 | 25000 |
| Example | 27 | 550 | 35 | 530 | 20 | 1000 | 5 | 25000 |
| Example | 28 | 550 | 35 | 520 | 20 | 1000 | 5 | 25000 |
| Example | 29 | 550 | 55 | 530 | 20 | 1000 | 5 | 25000 |
| Example | 30 | 550 | 200 | 530 | 20 | 1000 | 5 | 25000 |
| Example | 31 | 550 | 45 | 525 | 20 | 1000 | 5 | 25000 |
| Example | 32 | 550 | 50 | 530 | 20 | 1000 | 5 | 25000 |
| Comparative Example | 33 | 450 | 50 | 430 | 15 | 5000 | 5 | 25000 |
| Comparative Example | 34 | 600 | 50 | 580 | 15 | 5000 | 5 | 25000 |
| Comparative Example | 35 | 540 | 50 | 505 | 15 | 5000 | 5 | 25000 |
| Comparative Example | 36 | 540 | 50 | 520 | 15 | 5000 | 5 | 25000 |
| Comparative Example | 37 | 520 | 50 | 500 | 15 | 6000 | 5 | 25000 |
| Comparative Example | 38 | 520 | 50 | 500 | 15 | 5000 | 5 | 20000 |
| Comparative Example | 39 | 520 | 50 | 490 | 10 | 5000 | 5 | 25000 |
| Comparative Example | 40 | 520 | 50 | 500 | 15 | 5000 | 15 | 25000 |
| Comparative Example | 41 | 560 | 50 | 560 | 20 | 5000 | 5 | 25000 |
| Example | 42 | 530 | 45 | 510 | 30 | 5000 | 5 | 30000 |

(continued)

| Type | No. | Manufacturing conditions | | | | | | |
|---|---|---|---|---|---|---|---|---|
| | | Bath temperature (°C) | Adhesion amount of plated layer (g/m$^2$) | Entering sheet temperature (°C) | Cooling rate in bath temperature to 320°C (°C/s) | Cooling gas flux in bath temperature to 320°C (L/min/m$^2$) | Average cooling rate in 320 to 260°C (°C/s) | Cooling gas flux in 320 to 260°C (L/min/m$^2$) |
| Example | 43 | 540 | 50 | 520 | 20 | 1000 | 5 | 25000 |
| Example | 44 | 540 | 60 | 520 | 15 | 100 | 5 | 45000 |
| Example | 45 | 540 | 60 | 520 | 20 | 1000 | 5 | 80000 |
| Comparative Example | 46 | 520 | 60 | 500 | 15 | 5000 | <u>7</u> | 25000 |
| Example | 47 | 530 | 45 | 505 | 15 | 1000 | 5 | 25000 |
| Example | 48 | 550 | 50 | 530 | 20 | 1000 | 5 | 55000 |
| Comparative Example | 49 | 530 | 15 | 485 | 15 | 5000 | 5 | 25000 |
| Example | 50 | 530 | 45 | 505 | 15 | 1000 | 2 | 25000 |
| Underlined values are outside the scope of preferable manufacturing conditions. | | | | | | | | |

[Table 3]

| Type | No. | Plated layer | | | Performance | |
|---|---|---|---|---|---|---|
| | | XRD | Surface structure | Mg$_2$Sn phase | Corrosion resistance in acidic environment | Simulated end surface corrosion resistance |
| | | I (002)/(I (101) + I (100)) | $\alpha$/MgZn$_2$ lamellar structure area fraction (%) | Presence and absence | | |
| Example | 1 | 0.5 | 0 | Absent | A | A |
| Example | 2 | 0.5 | 1 | Present | A | AA |
| Example | 3 | 0.5 | 1 | Present | AA | AA |
| Example | 4 | 0.5 | 3 | Present | AA | AA |
| Example | 5 | 0.6 | 6 | Present | AA | AAA |
| Example | 6 | 1.1 | 7 | Present | AA | AAA |
| Example | 7 | 1.5 | 6 | Present | AAA | AAA |
| Example | 8 | 1.7 | 7 | Present | AAA | AAA |
| Example | 9 | 1.9 | 9 | Absent | AAA | AA |
| Example | 10 | 1.9 | 9 | Absent | AAAA | AA |
| Example | 11 | 1.2 | 10 | Present | AAA | AAA |
| Example | 12 | 1.3 | 12 | Present | AAA | AAA |
| Example | 13 | 1.0 | 14 | Absent | AA | AA |
| Example | 14 | 1.4 | 22 | Present | AA | AAA |
| Example | 15 | 8.5 | 23 | Present | AAA | AAA |
| Example | 16 | 9.9 | 23 | Present | AAAA | AAA |
| Example | 17 | 11.1 | 23 | Present | AAA | AAA |

(continued)

| Type | No. | Plated layer | | | Performance | |
|---|---|---|---|---|---|---|
| | | XRD | Surface structure | Mg$_2$Sn phase | Corrosion resistance in acidic environment | Simulated end surface corrosion resistance |
| | | I (002)/(I (101) + I (100)) | α/MgZn$_2$ lamellar structure area fraction (%) | Presence and absence | | |
| Example | 18 | 13.1 | 56 | Present | AAA | AAA |
| Example | 19 | 14.6 | 25 | Present | AAA | AAA |
| Example | 20 | 17.8 | 0 | Absent | A | A |
| Example | 21 | 19.2 | 26 | Present | AAA | AAA |
| Example | 22 | 18.0 | 29 | Present | AAA | AAA |
| Example | 23 | 0.6 | 0 | Absent | A | A |
| Example | 24 | 0.6 | 0 | Absent | A | A |
| Example | 25 | 0.5 | 0 | Absent | A | A |
| Example | 26 | 19.4 | 29 | Present | AAA | AAA |
| Example | 27 | 20.1 | 33 | Present | AAA | AAA |
| Example | 28 | 18.5 | 35 | Present | AAA | AAA |
| Example | 29 | 16.7 | 38 | Present | AAA | AAA |
| Example | 30 | 15.6 | 39 | Present | AAA | AAA |
| Example | 31 | 14.1 | 45 | Present | AAA | AAA |
| Example | 32 | 16.6 | 70 | Present | AAA | AAA |
| Comparative Example | 33 | 0.5 | 0 | Absent | B | A |
| Comparative Example | 34 | <u>0.3</u> | 0 | Absent | B | B |
| Comparative Example | 35 | <u>0.4</u> | 0 | Absent | B | B |
| Comparative Example | 36 | <u>0.4</u> | 0 | Absent | B | AA |
| Comparative Example | 37 | <u>0.3</u> | 0 | Absent | B | A |
| Comparative Example | 38 | <u>0.3</u> | 0 | Absent | B | A |
| Comparative Example | 39 | <u>0.3</u> | 0 | Absent | B | A |
| Comparative Example | 40 | <u>0.2</u> | 0 | Absent | B | A |
| Comparative Example | 41 | <u>0.3</u> | 0 | Absent | B | A |
| Example | 42 | 0.5 | 66 | Present | AA | AAA |
| Example | 43 | 19.0 | 26 | Present | AAA | AAA |
| Example | 44 | 18.1 | 28 | Present | AAA | AAA |
| Example | 45 | 17.8 | 27 | Present | AAA | AAA |
| Comparative Example | 46 | <u>0.5</u> | 0 | Absent | B | A |
| Example | 47 | 10.4 | 23 | Present | AAA | AAA |
| Example | 48 | 12.2 | 41 | Present | AAA | AAA |
| Comparative Example | 49 | Poor plating external appearance | | | | |
| Example | 50 | 11.5 | 22 | Present | AAA | AAA |
| Underlined values are outside the scope of the present invention. | | | | | | |

INDUSTRIAL APPLICABILITY

The plated steel material of the present disclosure is exceptional in terms of sacrificial corrosion resistance and corrosion resistance in an acidic environment and is thus highly industrially applicable.

REFERENCE SIGNS LIST

1 Plated steel material
11 Steel material
12 Plated layer

**Claims**

1. A plated steel material comprising:

   a steel material; and
   a plated layer on the steel material,
   wherein the plated layer has a chemical composition containing, in terms of mass%,
   Al: 6.0 to 30.0%,
   Mg: 3.0 to 15.0%,
   Fe: 0.01 to 15.00%,
   Si: 0 to 2.0%,
   Ca: 0 to 2.00%,
   one or two or more elements selected from an element group of Sb: 0 to 0.50%, Pb: 0 to 0.50%, Cu: 0 to 1.00%, Sn: 0 to 1.00%, Ti: 0 to 1.00%, Cr: 0 to 1.00%, Nb: 0 to 1.00%, Zr: 0 to 1.00%, Ni: 0 to 1.000%, Mn: 0 to 1.00%, Mo: 0 to 1.00%, Ag: 0 to 1.00%, Li: 0 to 1.00%, La: 0 to 1.000%, Ce: 0 to 1.000%, B: 0 to 0.500%, Y: 0 to 0.50%, P: 0 to 0.50%, Sr: 0 to 0.50%, Co: 0 to 0.500%, Bi: 0 to 0.500%, In: 0 to 0.50%, V: 0 to 0.500%, and W: 0 to 0.50%, in an amount of 0 to 5.0% in total, and
   the remainder: Zn and an impurity, and
   the plated layer has a diffraction intensity obtained from a result of X-ray diffraction measurement, the diffraction intensity satisfying formula (1) below:

$$0.5 \leq I(002)_{Zn}/\{I(100)_{Zn} + I(101)_{Zn}\} \leq 25.0 \quad \cdots \quad (1)$$

   in the formula (1), $I(002)_{Zn}$ represents an $\eta$-Zn phase (002) diffraction intensity, $I(100)_{Zn}$ represents an $\eta$-Zn phase (100) diffraction intensity, and $I(101)_{Zn}$ represents an $\eta$-Zn phase (101) diffraction intensity.

2. The plated steel material according to claim 1, wherein Al and Mg in the plated layer are Al: 10.0 to 25.0% and Mg: 4.5 to 15.0%, respectively.

3. The plated steel material according to claim 1 or 2, wherein Al and Mg in the plated layer are Al: 15.0 to 22.0% and Mg: 5.5 to 15.0%, respectively.

4. The plated steel material according to any one of claims 1 to 3, wherein a diffraction intensity of the plated layer obtained from a result of X-ray diffraction measurement satisfies formula (2) below:

$$1.5 \leq I(002)_{Zn}/\{I(100)_{Zn} + I(101)_{Zn}\} \leq 25.0 \quad \cdots \quad (2).$$

5. The plated steel material according to any one of claims 1 to 4, wherein an area fraction of [$\alpha$/MgZn$_2$ eutectic structure] contained in a surface structure of the plated layer in a plane view is 5 to 70%.

6. The plated steel material according to any one of claims 1 to 5, wherein an area fraction of [eutectic structure of $\alpha$/MgZn$_2$] contained in a surface structure of the plated layer in a plane view is 10 to 70%.

7. The plated steel material according to any one of claims 1 to 6, wherein

   Sn in the plated layer is Sn: 0.05 to 0.50%, in terms of mass%, and
   a $Mg_2Sn$ phase is detected by a result of X-ray diffraction measurement of the plated layer.

8. The plated steel material according to any one of claims 1 to 7, wherein 0.005 to 0.500% in total of one or two of La and Ce are contained.

FIG. 1

## INTERNATIONAL SEARCH REPORT

| International application No. |
| --- |
| **PCT/JP2024/014682** |

### A. CLASSIFICATION OF SUBJECT MATTER

*C23C 2/06*(2006.01)i; *C22C 18/00*(2006.01)i; *C22C 18/04*(2006.01)i; *C23C 2/02*(2006.01)n; *C23C 2/26*(2006.01)n
FI:  C23C2/06; C22C18/00; C22C18/04; C23C2/02; C23C2/26

According to International Patent Classification (IPC) or to both national classification and IPC

### B. FIELDS SEARCHED

Minimum documentation searched (classification system followed by classification symbols)

C23C2/06; C22C18/00; C22C18/04; C23C2/02; C23C2/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2005/056863 A1 (SUMITOMO METAL INDUSTRIES, LTD.) 23 June 2005 (2005-06-23)<br>     paragraphs [0034]-[0035], [0045] | 1-8 |
| A | JP 2001-355053 A (NIPPON STEEL CORPORATION) 25 December 2001 (2001-12-25)<br>     paragraphs [0034]-[0040] | 1-8 |
| A | JP 2001-164350 A (DAIDO STEEL SHEET CORP.) 19 June 2001 (2001-06-19)<br>     paragraph [0007] | 1-8 |
| A | JP 2021-014605 A (KABUSHIKI KAISHA KOBE SEIKO SHO) 12 February 2021 (2021-02-12)<br>     paragraphs [0062]-[0064] | 1-8 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 June 2024** | **18 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/014682**

| Patent document cited in search report | | | Publication date (day/month/year) | Patent family member(s) | | | Publication date (day/month/year) |
|---|---|---|---|---|---|---|---|
| WO | 2005/056863 | A1 | 23 June 2005 | (Family: none) | | | |
| JP | 2001-355053 | A | 25 December 2001 | (Family: none) | | | |
| JP | 2001-164350 | A | 19 June 2001 | (Family: none) | | | |
| JP | 2021-014605 | A | 12 February 2021 | US | 2022/0364214 | A1 | |
| | | | | paragraphs [0080]-[0088] | | | |
| | | | | WO | 2021/006131 | A1 | |
| | | | | EP | 3967780 | A1 | |
| | | | | CN | 113950539 | A | |
| | | | | KR | 10-2022-0008911 | A | |

Form PCT/ISA/210 (patent family annex) (July 2022)

**EP 4 696 806 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023064064 A
- JP 2021085086 A
- WO 2011001662 A